# EUROPEAN PATENT APPLICATION

(11) **EP 2 800 010 A1**
(43) Date of publication of application: **05.11.2014**
(21) Application number: 12862239.6
(22) Date of filing: 28.06.2012
(51) Int. Cl.: G06F 17/14

(54) **FFT/DFT REVERSE ARRANGEMENT SYSTEM AND METHOD AND COMPUTING SYSTEM THEREOF**

(30) Priority: 27.12.2011 CN 201110444738
(71) Applicant: ZTE Corporation, Shenzhen, Guangdong 518057 (CN)
(72) Inventor: XIAO, Haiyong, Shenzhen Guangdong 518057 (CN)
(74) Representative: Brevalex
(86) International application number: PCT/CN2012/077800
(87) International publication number: WO 2013/097436

(57) **Abstract**

Fast Fourier Transformation (FFT) / Discrete Fourier Transformation (DFT) reverse sorting system, method and calculation system thereof are provided. The reverse sorting system includes a signal control device, configured to obtain a control signal corresponding to each point of data to be reversed and send the control signal to a reverse device, such that the reverse device reverse an order of each point of the data based on a specific reverse rule, and the reverse device, configured to sort the data to be reversed in a reverse order based on the received control signal. With the system and method provided by the disclosure, the problem that the time taken for FFT/DFT reverse sorting is too long when a vector processor is used to perform FFT/DDT operations and the vector processor has a low efficiency can be solved, and the vector calculation efficiency of FFT/DFT can be improved.

## Description

### TECHNICAL FIELD

The disclosure relates to the field of communication technology, and particularly relates to a Fast Fourier Transformation (FFT) / Discrete Fourier Transformation (DFT) reverse sorting system and method and calculation system thereof.

### BACKGROUND

FFT and DFT are widely used in signal processing and communication systems, and in particular in communication systems such as long term evolution (Long Term Evolution, LTE), digital audio broadcast (Digital Audio Broadcast, DAB) and the like which involve Orthogonal Frequency Division Multiplexing (OFDM). For a traditional FFT / DFT algorithm, regardless of whether it is a decimation-in-time (DIT) algorithm or decimation-in-frequency (DIF) algorithm, it is necessary to perform a dedicated reversing operation on input or output data; and for both DIT and DIF algorithms, when being implemented in a vector processor, a number of intersecting connection lines have to be introduced in the vector processing unit, otherwise the vector processor cannot achieve a high efficiency, resulting in increased power consumption.

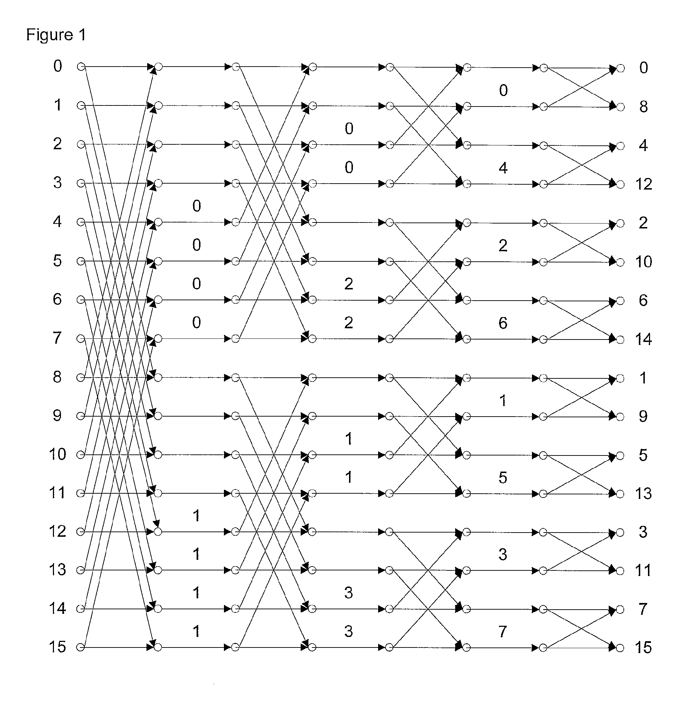

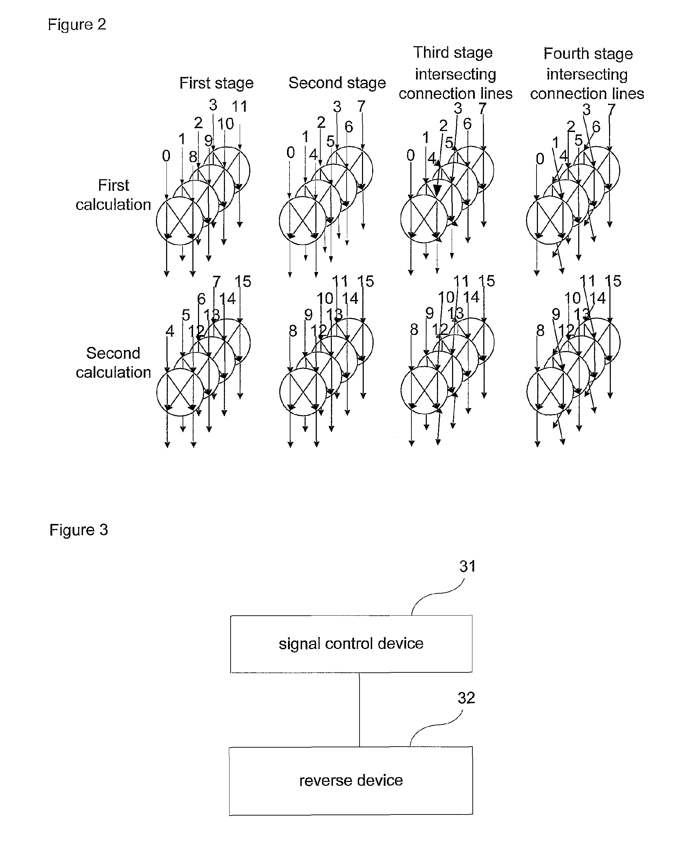

Figure 1 shows a flowchart of a DIT normal-order-input 16-point FFT algorithm. If it is directly implemented in four DIT butterfly vector processors, at a highest efficiency, each stage of the FFT is performed through two vector butterfly calculations. As can be seen from Figure 2, for the last two stages of FFT, intersecting connection lines have to be introduced to take advantage of all four butterflies, otherwise the vector processor cannot achieve a high efficiency, especially for the last stage, only one butterfly can be calculated for each time, resulting in significantly reduced efficiency and increased power consumption.

On the other hand, although the introduction of intersecting connection lines can improve the calculation efficiency, there are a large number of connection lines when there are many calculation units. For example, if the vector calculation unit has 16 DIT units, it is necessary to introduce intersecting connection lines for all the last four stages in order to accomplish the FFT operation, and thus the number of the intersecting connection lines is up to 4000. Here, assuming that the data has a digit width of 16, the large number of intersecting connection lines cause charging/discharging current and power consumption to be increased.

In addition to the above-described intersecting connection line problems, standard FFT / DFT algorithm requires a further dedicated data reversing operation besides the butterfly calculation. Data reversing may be performed serially or in parallel. If it is performed serially, the address of each reversed data can be calculated by software or hardware. Data reversing in this way consumes a lot of time, and when there are a large number of vector butterfly units, the time taken on the reversing is several times more than that taken on the butterfly calculation, resulting in reduced efficiency of the vector processor.

### SUMMARY

The embodiments of the disclosure provide a FFT / DFT reverse sorting system and method and computing system thereof, which can quickly perform reverse sorting in the FFT/DFT calculation in parallel.

An embodiment of the disclosure provides a FFT/DFT reverse system. The system includes a signal control device and a reverse device.

The signal control device is configured to obtain a control signal corresponding to each point of data to be reversed and send the control signal to the reverse device. The control signal is set based on a specific reverse rule, wherein the specific reverse rule is: according to points N=pₘ...pᵢ...p₂ p₁ of the data to be reversed, determining the points of the data are subjected to m-stage FFT/DFT reverse sorting in an order of radix pₘ,..., radix pᵢ,...,radix p₂, radix p₁; when reversing an (m-i)^{th} stage of data, taking adjacent pₘ* pₘ₋₁*...*pᵢ₊₁ number of data as a data set, dividing all the data into pᵢ portions from top to bottom based on values of cᵢ in the respective data's corresponding address digits cₘ...c₂c₁, and sorting the data in unit of the data set.

The reverse device is configured to sort the data to be reversed in a reverse order based on the received control signal.

Preferably, a control signal look-up table is stored in the signal control device and accordingly, the signal control device is configured to find the control signal corresponding to the data to be reversed using the control signal look-up table and send out the control signal.

The system may further comprise a control signal look-up table storing device, and accordingly, the signal control device is configured to obtain the stored control signal look-up table from the control signal look-up table storing device, find the control signal corresponding to the data to be reversed using the control signal look-up table and send out the control signal.

The reverse device may further include a control signal processing unit, a storage unit and a swap unit.

The control signal processing unit is configured to receive the control signal from the signal control device and send the control signal to the swap unit.

The storage unit is configured to store the each point of data to be reversed.

The swap unit is configured to swap the data to be reversed stored in the storage unit based on the control signal.

Preferably, the swap units form a multiple-stage web structure, the number of stages depends on the width of data accessed by the vector processor.

In each stage, there are a same number of swap units.

The number of swap units in each stage depends on a number of calculation units in a vector processor.

Preferably, the number of swap units in each stage is half of the number of calculation units in the vector processor.

Preferably, each swap unit may include two multiplexers.

For each multiplexer, there is a control signal input for inputting the control signal corresponding to 2-point data to be reversed, and for each multiplexer, there are two data inputs, each connected to a storage unit corresponding to a respective point of the data to be reversed, and the input 2-point data are swapped or passed through based on the input control signal.

In an embodiment, a FFT/DFT calculation system is provided. The system includes a vector calculation device, a vector register and a storage. The vector calculation device sends data after each stage of FFT/DFT calculation to the vector register for caching, and the data cached in the vector register are reversed in order and then sent to the storage. The system may also include a reverse system.

The reverse system is configured to reverse the order of the data cached in the vector register after each stage of FFT/DFT calculation performed by the vector calculation device and send the reversed data to the storage, and the storage is configured to store each stage of the data reversed by the reverse system and send a next stage of data to be calculated to the vector register for caching and waiting for a next stage of FFT/DFT calculation.

In an embodiment, a FFT/DFT reverse method is provided. The method includes obtaining a control signal corresponding to each point of data to be reversed; and sorting the data to be reversed in a reverse order based on the received control signal,

The control signal is set based on a specific reverse rule, wherein the specific reverse rule is: according to points N=pₘ...pᵢ...p₂ p₁ of the data to be reversed, determining the points of the data are subjected to m-stage FFT/DFT reverse sorting in an order of radix pₘ,..., radix pᵢ,...,radix p₂, radix p₁; when reversing an (m-i)^{th} stage of data, taking adjacent pₘ* pₘ₋₁*...*pᵢ₊₁ number of data as a data set, dividing all the data into pᵢ portions from top to bottom based on values of cᵢ in the respective data's corresponding address digits cₘ...c₂c₁, and sorting the data in unit of the data set.

Further, when the data to be reversed are obtained for the first time, the calculation stage is initialized to 0; when a next stage of data to be reversed are received, the calculation stage is added 1.

Further, when performing reverse sorting for each stage of data, a stored control signal look-up table is looked up, to find the control signal corresponding to the data to be reversed, and the stage of data to be reversed are sorted in a reverse order based on the received control signal. After m butterfly calculations and m-1 sortings, the FFT/DFT calculation is completed.

Compared with the prior art, the subject matter of the disclosure has the following advantages:
the embodiments of the disclosure provide a FFT / DFT reverse sorting system and method and computing system thereof, the FFT/DFT reverse operation is performed by the swap units inthe hardware sorting network in the vector pipeline data paths, and after each stage of butterfly calculation, the data are sorted by the reverse device in the control pipeline. the problem that the time taken for FFT/DFT reverse sorting is too long when a vector processor is used to perform FFT/DDT operations and the vector processor has a low efficiency can be solved, and the vector calculation efficiency of FFT/DFT can be improved.

### BRIEF DESCRIPTION OF THE DRAWINGS

Figure 1 shows a flowchart of a DIT normal-order-input 16-point FFT algorithm in the prior art;
Figure 2 is a layout view of intersecting connection lines required in the four DIT butterfly vector processors in Figure 1;
Figure 3 is a block diagram of a reverse sorting system according to an embodiment of the disclosure;
Figure 4 is a block diagram of a calculation system according to an embodiment of the disclosure;
Figure 5 is a flowchart of a method according to an embodiment of the disclosure;
Figure 6 is a block diagram of a reverse device according to a first embodiment of the disclosure;
Figure 7 is a block diagram of a swap unit according to the first embodiment of the disclosure;
Figure 8 is a schematic view showing rules for iterative reverse of 16-point FFT according to a second embodiment of the disclosure;
Figure 9 is a schematic view showing rules for iterative reverse of 24-point DFT according to a third embodiment of the disclosure;
Figure 10 is a flow chart of sorting 16-point data among stages according to a fourth embodiment of the disclosure;
Figure 11 is a flow chart of sorting 24-point data among stages according to a fifth embodiment of the disclosure;
Figure 12 is a flow chart of sorting 16 DIT butterfly units according to a sixth embodiment of the disclosure;
Figure 13 is a schematic view of a first stage of the data path in the sixth embodiment of the disclosure;
Figure 14 is a schematic view of a second stage of the data path in the sixth embodiment of the disclosure;
Figure 15 is a schematic view of a third stage of the data path in the sixth embodiment of the disclosure; and
Figure 16 is a schematic view of a fourth stage of the data path in the sixth embodiment of the disclosure.

### DETAILED DESCRIPTION

For various embodiments of the disclosure, their main principle, specific implementations and beneficial effects that can be achieved will be described in detail with reference to the figures.

Figure 3 is a block diagram of a reverse sorting system according to an embodiment of the disclosure. As shown in Figure 3, the system includes a signal control device 31 and a reverse device 32.

The signal control device 31 is configured to obtain a control signal corresponding to each point of data to be reversed and send the control signal to the reverse device 32, such that the reverse device 32 reverse an order of each point of the data based on a specific reverse rule, where the control signal is set based on the specific reverse rule. The specific reverse rule is: according to points N=pₘ...pᵢ...p₂ p₁ of the data to be reversed, determining the points of the data are subjected to m-stage FFT/DFT reverse sorting in an order of radix pₘ,..., radix pᵢ,...,radix p₂, radix p₁; when reversing an (m-i)^{th} stage of data, taking adjacent pₘ* pₘ₋₁*...*pᵢ₊₁ number of data as a data set, dividing all the data into pᵢ portions from top to bottom based on values of cᵢ in the respective data's corresponding address digits cₘ...c₂c₁, and sorting the data in unit of the data set.

The reverse device 32 is configured to sorting the data to be reversed in a reverse order based on the received control signal.

A control signal look-up table may be stored in the signal control device.

Accordingly, the signal control device is configured to find the control signal corresponding to the data to be reversed using the control signal look-up table and send out the control signal.

The reverse sorting system may also include a control signal look-up table storing device.

Accordingly, the signal control device is configured to obtain the stored control signal look-up table from the control signal look-up table storing device, find the control signal corresponding to the data to be reversed using the control signal look-up table and send the control signal.

The reverse device may further include a control signal processing unit, a storage unit and a swap unit.

The control signal processing unit is configured to receive the control signal from the signal control device and send the control signal to the swap unit.

The storage unit is configured to store each point of the data to be reversed.

The swap unit is configured to swap the data to be reversed stored in the storage unit based on the control signal.

There may be a number of swap units, which form a m-stage web structure, and in each stage, a same number of swap units are included.

The number of swap units in each stage depends on the number of calculation units in a vector processor.

Specifically, the number of swap units in each stage is half of the number of calculation units in the vector processor.

The swap unit may include two multiplexers.

For each multiplexer, there is a control signal input for inputting the control signal corresponding to the 2-point data to be reversed.

For each multiplexer, there are two data inputs, each connected to a storage unit corresponding to a respective point of the data to be reversed, and the input 2-point data are swapped or passed based on the input control signal.

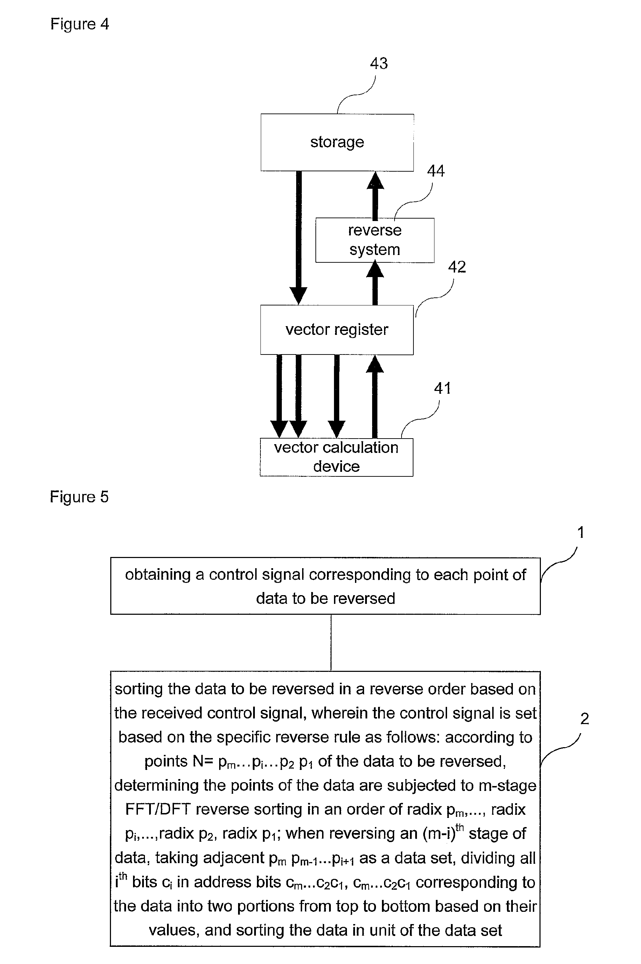

Figure 4 is a block diagram of a calculation system according to an embodiment of the disclosure. As shown in Figure 4, the system includes a vector calculation device 41, a vector register 42 and a storage 43. The vector calculation device 41 send the data after each stage of FFT/DFT calculation to the vector register 42 for caching. The data cached in the vector register 42 are reversed in order and then sent to the storage 43. The system may also include a reverse system 44.

The reverse system 44 is configured to reverse the order of the data cached in the vector register 42 after each stage of FFT/DFT calculation performed by the vector calculation device 41 and send the reversed data to the storage 43.

The storage 43 is configured to store each stage of the data reversed by the reverse system 44 and send a next stage of data to be calculated to the vector register 42 for caching and waiting for a next stage of FFT/DFT calculation.

Figure 5 is a flowchart of a method according to an embodiment of the disclosure. As shown in Figure 5, the method includes the following steps.

At step 1, a control signal corresponding to each point of data to be reversed is obtained.

At step 2, the data to be reversed are sorted in a reverse order based on the received control signal,
where the control signal is set based on the specific reverse rule. The specific reverse rule is: according to points N=pₘ...pᵢ...p₂ p₁ of the data to be reversed, determining the points of the data are subjected to m-stage FFT/DFT reverse sorting in an order of radix pₘ,..., radix pᵢ,...,radix p₂, radix p₁; when reversing an (m-i)^{th} stage of data, taking adjacent pₘ* pₘ₋₁*...*pᵢ₊₁ number of data as a data set, dividing all the data into pᵢ portions from top to bottom based on values of cᵢ in the respective data's corresponding address digits cₘ...c₂c₁, and sorting the data in unit of the data set.

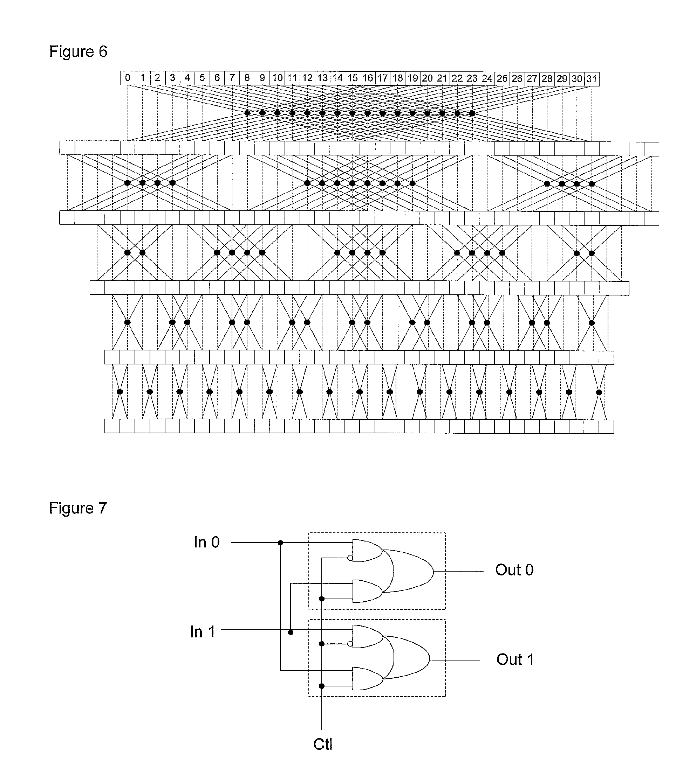

Figure 6 is a block diagram of a reverse device according to a first embodiment of the disclosure; In Figure 6, each black point represents a swap unit, there are five stages of swap units, and in each stage there are 16 swap units. By storing the data to be reversed in 32 subscripters, i.e., storage units, each point of the data can be outputted in a direct or intersecting way. The specific paths are controlled based on the control signals received by the swap units. Figure 7 is a block diagram of the swap unit. The swap unit includes two multiplexers, as shown in the rectangular block as shown in Figure 7. For each multiplexer, there is a control signal input Ctl for inputting the control signal corresponding to the 2-point data to be reversed. For each multiplexer, there are two data inputs In0 and In1, each connected to a storage unit corresponding to a respective point of the data to be reversed, the input 2-point data are swapped based on the input control signal and the swapped 2-point data are outputted through two outputs Out0 and Out1.

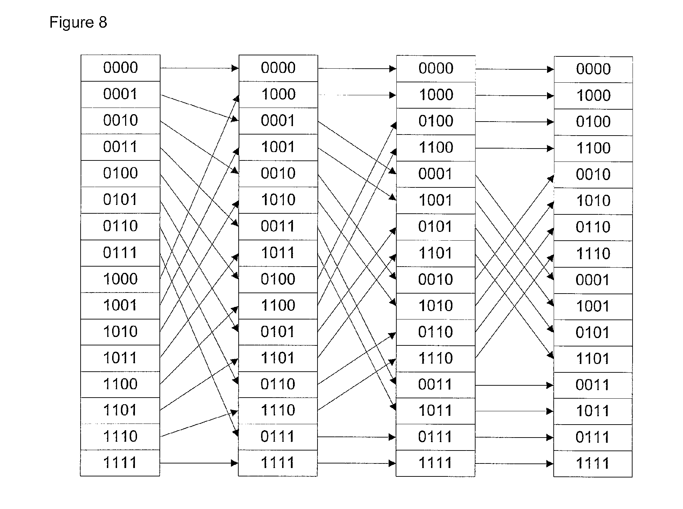

Figure 8 is a schematic view showing rules for iterative reverse of 16-point FFT according to a second embodiment of the disclosure. As shown in Figure 8, the process includes: 16 data are represented using 4 address digits, from left to right, each time the data are sorted for once, such that the four address digits newly adds a digit each time and come into consistent with the final reverse result. The first sorting makes c4 to be consistent with the reversed address, and the process is implemented by dividing the data into a higher portion c4=0 and a lower portion c4=1 and sorting the higher and lower portions alternately. The second sorting makes c3 to be consistent with the reversed address. In order to ensure the sorted c4 will not be influenced, adjacent data in which their c4s are 0 and 1 respectively are considered as a data set, the data are sorted in unit of data set, and the processor is similar to the above c4 sorting process, i.e., dividing the data into a higher portion c3=0 and a lower portion c3=1 and sorting the higher and lower portions of the data alternately in unit of data set. The third sorting makes c2 to be consistent with the reversed address. In order to ensure the sorted c4c3 will not be influenced, adjacent data in which their c4c3 are 00, 01, 10 and 11 respectively are considered as a data set, the data are sorted in unit of data set, and the processor is implemented by dividing the data into a higher portion c2=0 and a lower portion c2=1 and sorting the higher and lower portions of the data alternately in unit of data set. At this time, the order of c1 is as same as that of c1 after being reversed, and thus the reverse operation is finished.

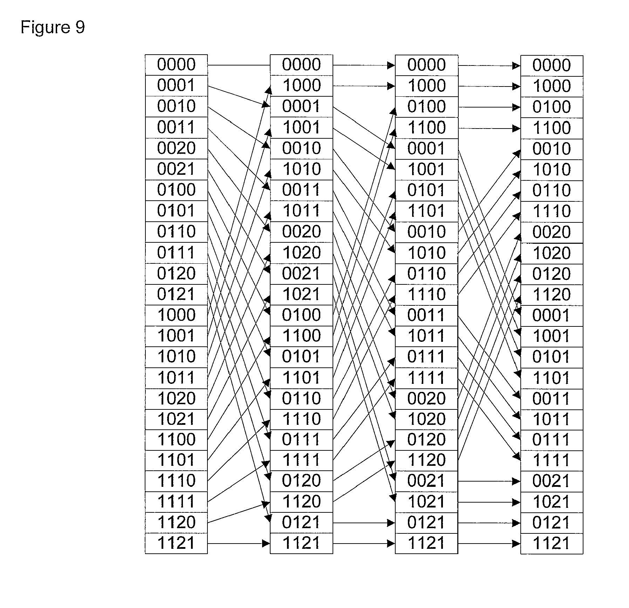

Figure 9 is a schematic view showing rules for iterative reverse of 24-point DFT according to a third embodiment of the disclosure. The iterative reverse process of the 24-point DFT in an order of radix 2, 2, 3, 2 is: assuming that the address mixing radix is represented as c4c3c2c1 (c4, c3 and c1 is binary and c2 is trinary). The first sorting makes the order of c4 to be consistent with that of the address after being reversed, and the sorting process is as same as that of the above 16-point FFT. The second sorting makes the order of c3 to be consistent with that of the address after being reversed, and the sorting process is as same as that of the above 16-point FFT. The third sorting makes c2 to be consistent with the reversed address. In order to ensure the sorted c4c3 will not be influenced, adjacent data in which their c4c3 are 00, 01, 10 and 11 respectively are considered as a data set, the data are sorted in unit of data set, and then the data are divided into three portions c2=0, 1, 2 based on the value of c2, and the three portions of the data are sorted alternately in unit of data set. At this time, the order of c1 is as same as that of c1 after being reversed, and thus the reverse operation is finished.

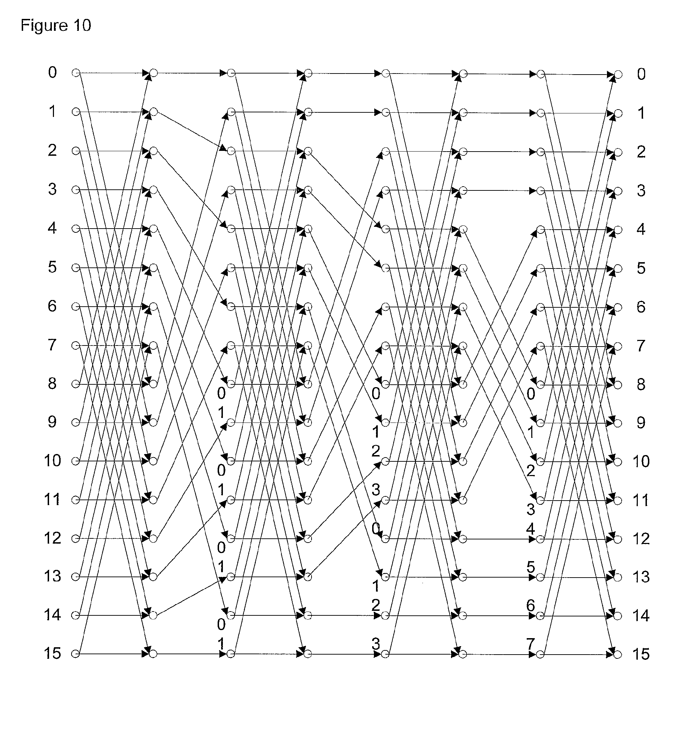

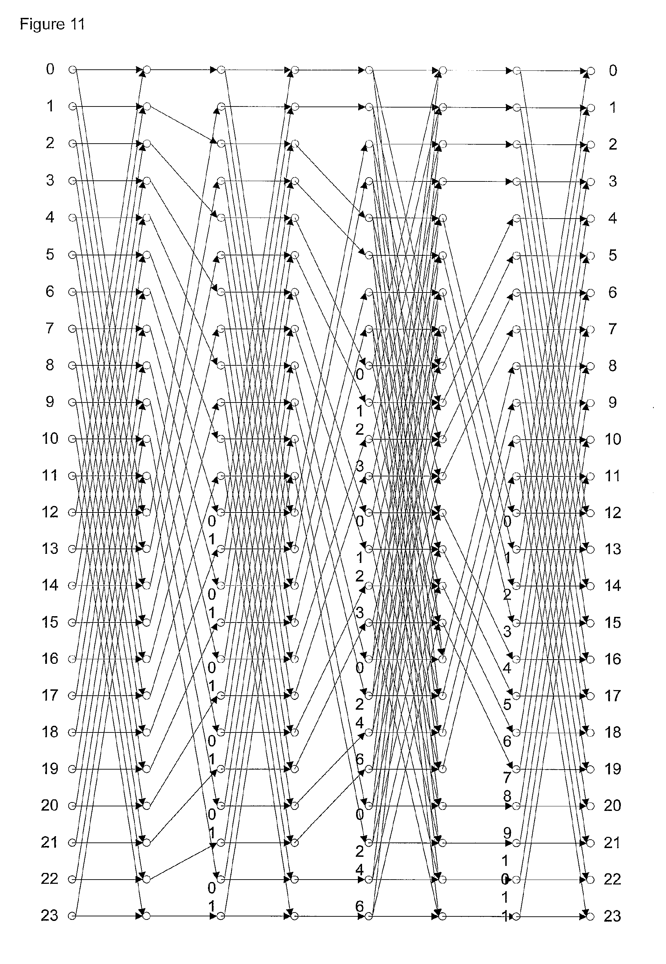

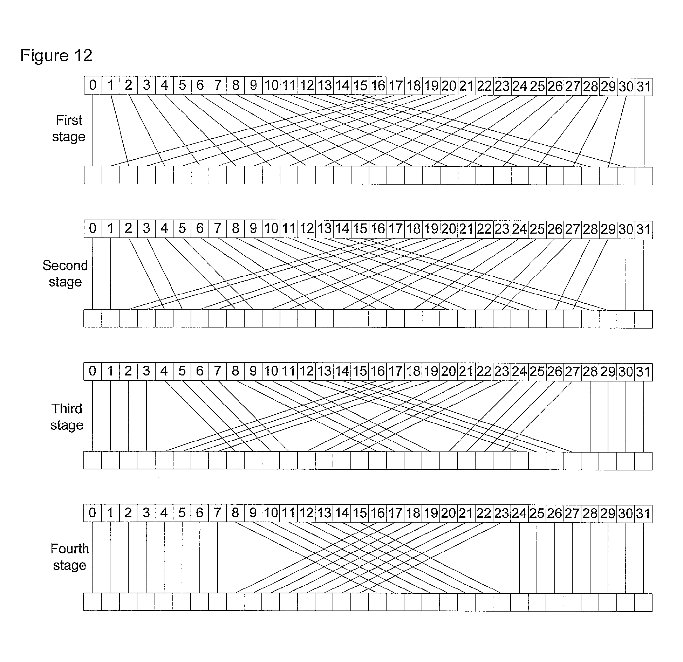

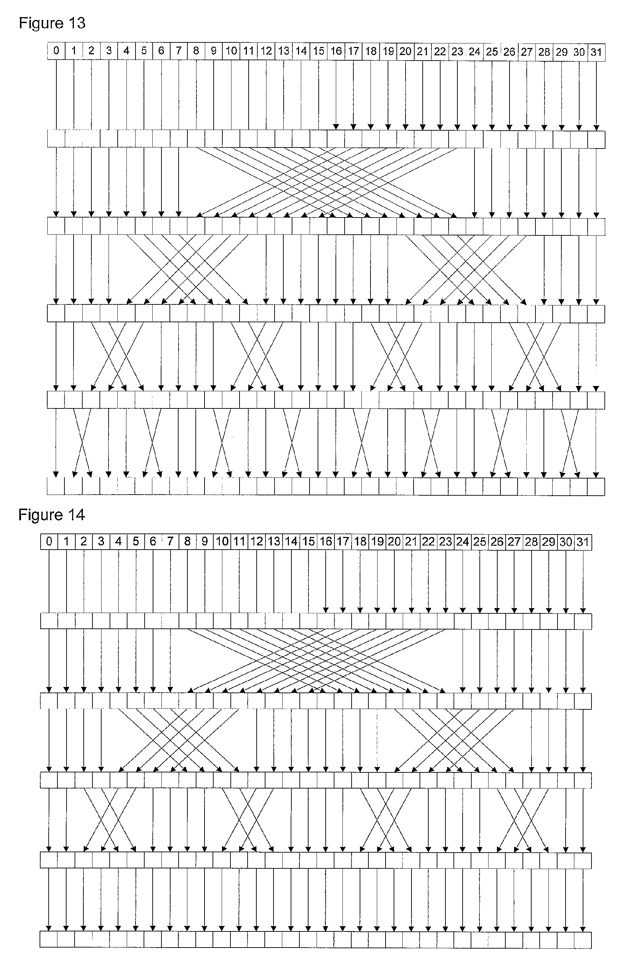

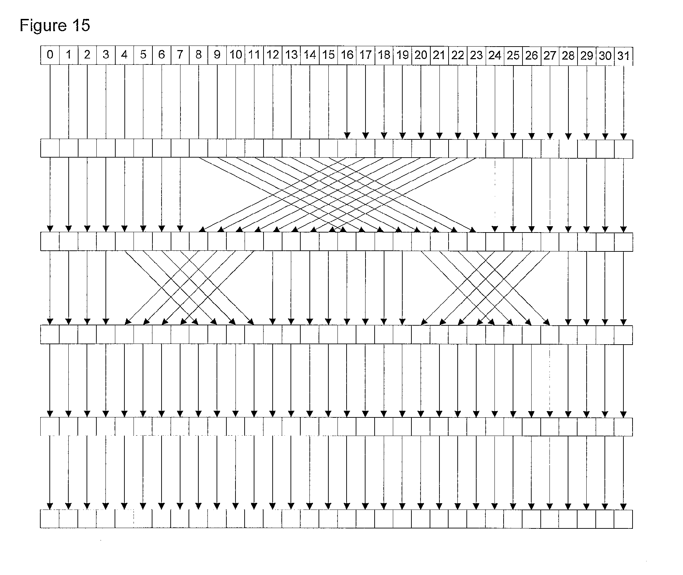

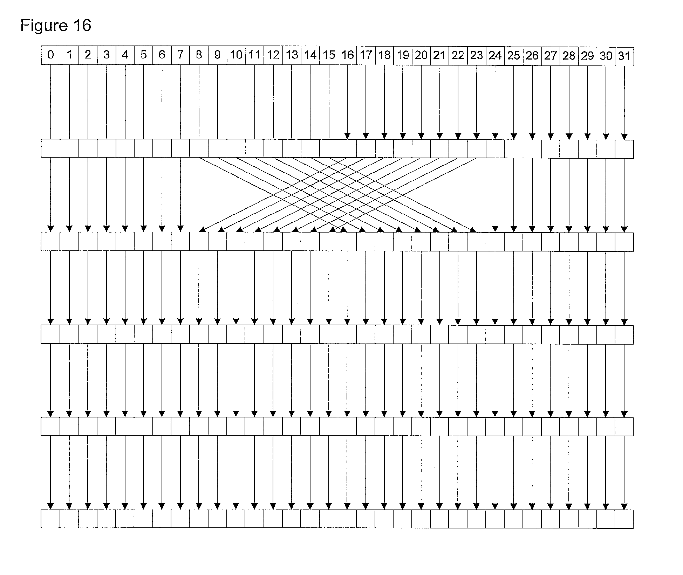

Figure 10 is a flow chart of sorting 16-point data among stages according to a fourth embodiment of the disclosure. Figure 11 is a flow chart of sorting 24-point (radix 2, 2, 3, 2) data among stages according to a fifth embodiment of the disclosure. As shown in Figures 10 and 11, each point of the data is inputted in normal order and the calculation results are the reverse result of FFT/DFT. Further, as can be seen from Figures 10 and 11, if each stage of inputs are sorted as required and the radix for the butterfly calculation is the same, the input data at different calculation stages may be input into the vector units in an same order for calculation. Taking a 16-point FFT for example, in each stage, the first 8 data and last 8 data form butterflies for calculation, the input data between the butterflies have a same maximum distance, facilitating butterfly vector calculation. Additionally, no other data connections have to be introduced in the vector calculation units for FFT/DFT, thus facilitating reduction of the power consumption. To eliminate the time taken for the reverse operation, the sorting process may be inserted into the pipeline in which the data from the register are stored back into the storage as shown in Figure 4. If the vector calculation unit has 16 DIT butterfly units, and there are at least four factor 2 in the FFT/DFT points, it is necessary to perform the 4-stage data sorting as shown in Figure 12 in the sorting network. Here, the radix 2 calculation are performed firstly and the corresponding sorting is implemented by using the 5-stage sorting network as shown in Figure 6. Each black point represents a swap unit, the data may be passed through or intersected. The swap unit may be in a form of the circuit as shown in Figure 7, i.e., consists of two multiplexers. The sorting network may implement the 4-stage sorting as required in Figure 12, and the data paths in which the sorting network implements the first 4 stages of sorting are shown in Figures 13 to 16.

Additionally, for larger point FFT butterfly calculation, for 2048-point FFT needed for LTE, in each of the first four stages of calculation, each set of continuous 16 data separated by 1024 points are inputted into the vector calculation units for butterfly calculation; then the calculation result is stored in the storage, and the reverse system sort the data in 4 sorting ways; for the FFT calculation after the first four stages, as the length of the data set to be alternately sorted is a multiple of 16, the sorting can be performed as long as the control data is stored in the address of the storage. If the number of factor 2 in the FFT/DFT is less than 4, for example, in LTE uplink transmission, the DFT has at least two factor 2, and there are only factors 2, 3 and 5, the radix 2 calculation has to be performed firstly, so as to use the sorting function of the sorting network to sort the calculation result; and for the one or two stages of calculation following the radix 2 calculation, when the data are to be stored in the storage, a mask and shift control with a length of 4, 12 or 8 should be added. When 4, 12 or 8 butterfly calculation results are stored each time, the calculation efficiency may be reduced, but the time taken for the data sorting alone may still be avoided by controlling the address at which the data are stored.

The disclosure provides a FFT/DFT vector calculation framework and a corresponding hardware sorting network. In the hardware sorting network, the vector calculation result is stored in the pipeline of storages for implementing FFT/DFT reverse, eliminating the time taken for the data reverse alone, and preventing a large number of intersecting connection lines from being introduced in the vector calculation units, thus reducing hardware overhead and power consumption of the FFT/DFT calculation. This sorting network can implement a sequence of sorting operations for supporting other sorting operations needed in the vector calculation.

As appreciated by the skilled in the art, the embodiments of the disclosure may be provided as a method, a system, or a computer program product. Therefore, the subject matter may take the form of a pure hardware embodiment, a pure software embodiment, an embodiment combining software and hardware. Moreover, the subject matter may be embodied on a computer program product including computer readable computer codes which are implemented on a computer storage medium, which may include but is not limited to disk storage, CD-ROM and optical storage.

The subject matter are described in connection with flowcharts and/or block diagrams of methods, systems/devices and computer program products according to the embodiments and the disclosure. As appreciated, each process and/or block in the flowchart and/or block digram and combination thereof may be implemented by computer program instructions. A machine may be formed by loading these computer program instructions in a general purpose computer, a dedicated computer, an embedded processor or a processor of other programmable data processing device, such that instructions executed by the computer or the processor of other programmable data processing device generates devices for implementing the functions indicated in one or more processes in the one or more flowcharts and/or one or more blocks in the one or more block diagrams.

These computer program instructions may also be stored in a computer readable storage which may guide the computer or other programmable data processing device to operate in a specific manner, such that the instructions stored in the computer readable storage may generate a product including instruction means, which implement the functions indicated in one or more processes in the one or more flowcharts and/or one or more blocks in the one or more block diagrams.

These computer program instructions may also be loaded in the computer or other programmable data processing device, such that a sequence of operation steps may be executed on the computer or other programmable data processing device to proceed with the processing implemented by the computer, such that the instructions executed by the computer or other programmable data processing device provide functions indicated in one or more processes in the one or more flowcharts and/or one or more blocks in the one or more block diagrams.

Although the preferred embodiments of the disclosure are described, as long as the skilled in the art learns the basic inventive concept, it is possible to modify and change the embodiments. Therefore, the attached claims are intended to be interpreted as including the preferred embodiments and any modification and change falling into the scope of the disclosure.

Apparently, the skilled in the art can modify and vary the invention without departing the spirit and scope of the disclosure. Thus, if the modifications and variances fall within the claims and equivalents thereof, the invention intends to include the modifications and variances.

## Claims

1. A Fast Fourier Transformation (FFT) / Discrete Fourier Transformation (DFT) reverse sorting system, comprising a signal control device and a reverse device,
wherein the signal control device is configured to obtain a control signal corresponding to each point of data to be reversed and send the control signal to the reverse device; the control signal is set based on a specific reverse rule as follows: according to points N=pₘ...pᵢ...p₂ p₁ of the data to be reversed, determining the points of the data are subjected to m-stage FFT/DFT reverse sorting in an order of radix pₘ,..., radix pᵢ,...,radix p₂, radix p₁; when reversing an (m-i)^{th} stage of data, taking adjacent pₘ* pₘ₋₁*...*pᵢ₊₁ number of data as a data set, dividing all the data into pᵢ portions from top to bottom based on values of cᵢ in the respective data's corresponding address digits cₘ...c₂c₁, and sorting the data in unit of the data set; and
wherein the reverse device is configured to sort the data to be reversed in a reverse order based on the received control signal.

2. The system according to claim 1, wherein a control signal look-up table is stored in the signal control device, and accordingly, the signal control device is configured to find the control signal corresponding to the data to be reversed using the control signal look-up table and send out the control signal.

3. The system according to claim 1, wherein the system further comprises a control signal look-up table storing device, and accordingly, the signal control device is configured to obtain the stored control signal look-up table from the control signal look-up table storing device, find the control signal corresponding to the data to be reversed using the control signal look-up table and send out the control signal.

4. The system according to claim 1, wherein the reverse device further comprises a control signal processing unit, a storage unit and a swap unit,
wherein the control signal processing unit is configured to receive the control signal from the signal control device and send the control signal to the swap unit,
wherein the storage unit is configured to store each point of the data to be reversed, and
wherein the swap unit is configured to swap the data to be reversed stored in the storage unit based on the control signal.

5. The system according to claim 4, wherein there are a number of swap units, which form a m-stage network structure, and in each stage, a same number of swap units are included, and
wherein the number of swap units in each stage depends on a number of calculation units in a vector processor.

6. The system according to claim 5, wherein the number of swap units in each stage is half of a number of calculation units in the vector processor.

7. The system according to claim 6, wherein the swap unit comprises two multiplexers, for each multiplexer, there is a control signal input for inputting the control signal corresponding to 2-point data to be reversed; and for each multiplexer, there are two data inputs, each connected to a storage unit corresponding to a respective point of the data to be reversed, and the input 2-point data are swapped or passed through based on the input control signal.

8. A Fast Fourier Transformation (FFT) / Dicrete Fourier Transformation (DFT) calculation system, comprising a vector calculation device, a vector register and a storage, wherein the vector calculation device sends data after each stage of FFT/DFT calculation to the vector register for caching, and the data cached in the vector register are reversed in order and then sent to the storage,
wherein the system further comprises a reverse system according to any of claims 1 to 7, the reverse system is configured to reverse the order of the data cached in the vector register after each stage of FFT/DFT calculation performed by the vector calculation device and send the reversed data to the storage, and
wherein the storage is configured to store each stage of the data reversed by the reverse system and send a next stage of data to be calculated to the vector register for caching and wait for a next stage of FFT/DFT calculation.

9. A Fast Fourier Transformation (FFT) / Dicrete Fourier Transformation (DFT) reverse sorting method, comprising:
obtaining a control signal corresponding to each point of data to be reversed; and sorting the data to be reversed in a reverse order based on the received control signal,
wherein the control signal is set based on the specific reverse rule as follows: according to points N=pₘ...pᵢ...p₂ p₁ of the data to be reversed, determining the points of the data are subjected to m-stage FFT/DFT reverse sorting in an order of radix pₘ,..., radix pᵢ,...,radix p₂, radix p₁; when reversing an (m-i)^{th} stage of data, taking adjacent pₘ* pₘ₋₁*...*pᵢ₊₁ number of data as a data set, dividing all the data into pᵢ portions from top to bottom based on values of cᵢ in the respective data's corresponding address digits cₘ...c₂c₁, and sorting the data in unit of the data set.

10. The method according to claim 9, further comprising:
when performing reverse sorting for each stage of data, looking up a stored control signal look-up table to find the control signal corresponding to the data to be reversed, and sorting the stage of data to be reversed in a reverse order based on the received control signal.
